# EUROPEAN PATENT APPLICATION

(11) **EP 2 177 570 A1**
(43) Date of publication of application: **21.04.2010**
(21) Application number: 08790926.3
(22) Date of filing: 07.07.2008
(51) Int. Cl.: C08L 101/00, B29B 7/38, C08K 3/00, H01B 1/24, H01M 4/86

(54) **STRUCTURAL BODY COMPRISING FILLER AND INCOMPATIBLE RESIN OR ELASTOMER, AND PRODUCTION PROCESS OR USE THEREOF**

(30) Priority: 06.07.2007 JP 2007178119
(71) Applicant: National Institute of Advanced Industrial Science And Technology, Tokyo 100-8921 (JP)
(72) Inventor: SHIMIZU, Hiroshi, Tsukuba-shi Ibaraki 305-8565 (JP); LI, Yongjin, Tsukuba-shi Ibaraki 305-8565 (JP)
(74) Representative: Thun, Clemens
(86) International application number: PCT/JP2008/062265
(87) International publication number: WO 2009/008400

(57) **Abstract**

The present invention provides a novel structure in which a filling material that is a filler is dispersed in an incompatible resin selected from a thermoplastic resin or a thermosetting resin and/or an incompatible elastomer; and use of the novel structure. In a cocontinuous structure formed from a binary system that is selected from an incompatible resin selected from a thermoplastic resin or a thermosetting resin and/or an incompatible elastomer, a filling material that is a filler is dispersed selectively and uniformly in one of the incompatible resin selected from the thermoplastic resin or the thermosetting resin and/or the incompatible elastomer. The structure is obtained by putting the filling material and the resin and/or the elastomer in a cylinder having a screw through a put-in part provided at an end of a melt-kneading part having a heating part; processing the resin or elastomer under the conditions where a rotation speed of the screw is 100 rpm to 3000 rpm and a shear rate is 150 to 4500 sec⁻¹; confining the resin or elastomer in a gap at a front end of the screw; and conducting circulation of moving the resin or elastomer from the gap to a rear end of the screw.

## Description

### TECHNICAL FIELD

The present invention relates to a cocontinuous structure that comprises a filling material and an incompatible resin selected from a thermoplastic resin or a thermosetting resin and/or an incompatible elastomer, that is formed from a cocontinuous structure comprising the incompatible resin or elastomer, and in which one resin of the incompatible resin contains the filling material that is a filler; a production method thereof; and use thereof. The structural body is used for electrically conductive or thermally conductive materials, electrode materials for fuel cells, electromagnetic wave absorption materials, and the like.

### BACKGROUND ART

The properties of an electrically conductive composite obtained by dispersing an electrically conductive filler or the like in a resin can be expected to greatly improve an electrically conductiveproperty. For the properties, what is selected as a filler is an important factor, and the dispersion state of the filler in the resin is also an important factor.

When an electrically conductive filler is added to a resin, it is theoretically and experimentally confirmed that the electrically conductive property of the composite can be enhanced by causing the filler molecules to have a network structure in the resin (Patent Document 4: Japanese Laid-Open Patent Publication No. 2006-527786).

However, with regard to the dispersion state of the filler in the resin, the dispersion state of the filler is not excellent, and thus consideration of dispersing an electrically conductive filler is effective for enhancing the electrically conductive property. With present technology, it cannot be said that the dispersion of the electrically conductive filler is sufficient.

Expectations for electrically conductive composites are high. For example, for electrode materials for fuel cells, use of electrically conductive composites is regarded as the most effective measure. In this case, on the assumption of having an excellent electrically conductive property, the following conditions are further required:
(1) Electrical conductivity per unit surface area or per unit volume being high;
(2) Mechanical strength being high;
(3) Having an impermeability to hydrogen gas and oxygen gas; and
(4) Having a chemically resistant property in an acidic atmosphere of an electrochemical cell.

At present, a graphite board that is machined so as to be noncorrosive or a metal board that is subjected to stamping, is used as an electrode material for a fuel cell or as a bipolar separator plate. However, the method using a graphite board that is manufactured by machining is expensive and is not suitable for large-scale production. In addition, there is a problem that use of a metal board increases plate weight and hence it is not practical. Thus, having an excellent electrically conductive property by which practical use is assumed, is not achieved.

Further, there is a proposal for using, as the above bipolar plate, a composite that is obtained by dispersing a carbon nanotube (CNT) in a noncorrosive fluorine polymer. Indeed, this contributes to weight reduction, but there is a problem that the operations become troublesome due to a process unique to the fluorine polymer, resulting in a failure to enhance an electrically conductive property that is the most problematic.

In a material having an excellent mechanical strength, and further, in an electrode material for a fuel cell for which it is assumed that an impermeability to hydrogen gas and oxygen gas and a chemically resistant property in an acidic atmosphere of an electrochemical cell are required, it is optimal to select: fluorine polymers having an excellent chemical resistance, such as poly(vinylidene fluoride) (PVDF); poly(p-phenylene sulfide) (PPS), polysulfone (PSF), polyether sulfone (PES), polyether ether ketone (PEEK), polyarylate (PAR), and the like, which similarly have an excellent chemical resistance; or nylon resins such as polyamide 6 (PA6) and polyamide 66 (PA66). At the same time, these materials contribute to weight reduction because they are resin materials. However, there is a problem that, even when electrically conductive fillers are directly dispersed in these resins including PVDF resin, the electrically conductive properties cannot be enhanced as intended because the dispersibility is poor.

Due to the above, for an electrically conductive composite, it is most important to achieve desired dispersion of an electrically conductive filler in a resin, and a novel method of dispersing an electrically conductive filler in a resin is required. Thus, it is an urgent issue to develop an electrically conductive composite having a novel structure obtained by the novel method, and to develop a novel method of dispersing an electrically conductive filler in a resin having, in particular, a poor direct dispersibility due to characteristics required for materials in the field in which these electrically conductive composites are used and to develop an electrically conductive composite having a novel structure and obtained by the novel method.

The inventors of the present invention and others have conducted research concerning the higher order structures of immiscible polymer blends, although the research does not relate directly to development of composites.

Conventionally, as the higher order structure of an immiscible polymer blend, it is well known that a sea-island structure is formed by one polymer being a matrix and the other polymer being in a dispersed phase.

A condition, where the composition between the polymers constituting the blend is proportional to the ratio of the melt viscosities of the polymers, causes this sea-island structure to undergo a phase conversion, and the relation between the pit and the land is inversed by changes of the composition and the viscosity ratio that are caused by this condition. A higher order structure appearing around the condition that causes this phase conversion, is a structure called a cocontinuous structure in which two types of polymers form continuous phases.

In a conventionally-known cocontinuous structure, continuous phases are formed unlike a sea-island structure, and thus it is known that various properties are exhibited due to its structure (Patent Documents 1 and 2).

Even in any immiscible polymer blends, a cocontinuous structure can be caused to appear by taking the above balance between the blend composition and the viscosity ratio of the constituent polymers.

For that purpose, the inventors of the present invention and others have already invented an internal-feedback-type and minute-quantity-type high-shear molding machine (Patent Document 3). With this machine, it is possible to change the melt viscosity of a resin in a wide range. Thus, by only kneading an immiscible polymer blend for several minutes, the viscosity ratio of the constituent polymers can be decreased greatly, and the size of the dispersed polymer phase can be reduced.

By using the internal-feedback-type and minute-quantity-type high-shear molding machine, the inventors of the present invention and others have invented a binary system in which a filler is nano-dispersed in a resin (oranelastomer) (Japanese Patent Application No. 2008-025964).

Further, a porous structure is obtained by forming a cocontinuous structure in a ternary system (polymer blend/filler), and then removing one continuous phase. This polymer blend is a combination of biodegradable resins, and the filler is limited to silica fillers such as clay.

The inventors of the present invention and others have proposed an invention in which a mesoporous structure obtained through a cocontinuous structure is formed within the realm of a ternary system (polymer blend/filler). In this invention, a porous structure is three-dimensionally formed, and thus it is optimal for selective permeability of substances. The other one maintains a structure in which a polymer that is not removed by a solvent and remains and that may be the skeleton of a mesoporous material is also similarly connected three-dimensionally, and thus a three-dimensionally very rigid structure similar to a natural bone can be provided even when the other polymer phase is removed. This structure can exhibit characteristics that are not conventionally provided, but, unfortunately, this invention cannot become a solution for the electrically conductive composite (Japanese Patent Application No. 2008-120781).

In dispersing an electrically conductive filler in a resin in the electrically conductive composite; and dispersing an electrically conductive filler in a resin having a poor direct dispersibility for the electrically conductive filler, an assumption has been made that a novel structure with an excellent electrically conductive characteristic that is different from conventional structures can be obtained by realizing the higher order structure of an immiscible polymer blend. Further, it is thought that a thermally conductive material or an electromagnetic wave absorption material can be obtained by using, as the filling material, a thermally conductive substance or a substance having a radio wave absorbability.
Patent Document 1: Japanese Laid-Open Patent Publication No. H7-102175 (the specification of Japanese Patent No. 3142424)
Patent Document 2: US Patent No. 6746627
Patent Document 3: Japanese Laid-Open Patent Publication No. 2005-313608
Patent Document 4: Japanese Laid-Open Patent Publication No. 2006-527786

### DISCLOSURE OF THE INVENTION

### PROBLEMS TO BE SOLVED BY THE INVENTION

Objects to be solved by the present invention are: to provide a novel structural body in which a filling material that is a filler is dispersed in an incompatible resin selected from a thermoplastic resin and a thermosetting resin and/or an incompatible elastomer; and to provide use of the novel structural body.

### SOLUTION TO THE PROBLEMS

The inventors of the present invention and others have conducted thorough research concerning the above objects, and have completed the present invention.

A cocontinuous structure comprising a filling material, and an incompatible resin selected from a thermoplastic resin or a thermosetting resin and/or an incompatible elastomer, the cocontinuous structure formed from a binary system that is selected from the incompatible resin selected from the thermoplastic resin or the thermosetting resin and/or the incompatible elastomer, wherein one of the incompatible resin selected from the thermoplastic resin or the thermosetting resin and/or the incompatible elastomer contains the filling material that is a filler.

The cocontinuous structure comprising the filling material and the incompatible resin selected from the thermoplastic resin or the thermosetting resin and/or the incompatible elastomer according to claim 1, wherein the filling material that is the filler is dispersed selectively and uniformly in the one of the incompatible resin selected from the thermoplastic resin or the thermosetting resin and/or the incompatible elastomer.

The cocontinuous structure comprising the filling material and the incompatible resin selected from the thermoplastic resin or the thermosetting resin and/or the incompatible elastomer according to claim 1 or 2, wherein the filling material is 0.01 to 300 % by weight to 100 % by weight of the incompatible resin or elastomer.

The cocontinuous structure comprising the filling material and the incompatible resin selected from the thermoplastic resin or the thermosetting resin and/or the incompatible elastomer according to any one of claims 1 to 3, wherein the incompatible resin selected from the thermoplastic resin or the thermosetting resin and/or the incompatible elastomer is a blend product of a thermoplastic resin or a thermosetting resin; a blend product of thermoplastic resins; a blend product of a thermoplastic resin and a natural rubber, a synthetic rubber, or a thermoplastic elastomer; or a blend product of natural rubbers, synthetic rubbers, or thermoplastic elastomers.

The cocontinuous structure comprising the filling material and the incompatible resin selected from the thermoplastic resin or the thermosetting resin and/or the incompatible elastomer according to any one of claims 1 to 4, wherein a blend product of the incompatible thermoplastic resins is a blend product of one combination of poly(vinylidene fluoride) (PVDF), a copolymer (VDF/TrFE) of vinylidene fluoride (VDF) and trifluoroethylene (TrFE), poly (p-phenylene sulfide) (PPS), polysulfone (PSF), polyether sulfone (PES), polyether ether ketone (PEEK), or polyarylate (PAR), with a polymer selected from polyamide 6 (PA6), polyamide 66 (PA66), polyamide 46 (PA46), and polyamide 11 (PA11).

The cocontinuous structure comprising the filling material and the incompatible resin selected from the thermoplastic resinor the thermosetting resin and/or the incompatible elastomer, according to any one of claims 1 to 5, wherein the filling material is a carbon filling material selected from a carbon nanotube (CNT), a carbon fiber (CF), a carbon black (CB), graphite (GF), and acetylene black (AB); a silica filling material selected from a clay fine particle (layer silicate), a silica fine particle, and a cage polysilsesquioxane (POSS) compound; or a metal oxide filling material selected from alumina (Al₂O₃), titanium dioxide (TiO₂), zinc oxide (ZnO), and cerium dioxide (CeO₂).

The cocontinuous structure comprising the filling material and the incompatible resin selected from the thermoplastic resin or the thermosetting resin and/or the incompatible elastomer according to any one of claims 1 to 5, wherein the added amount (% by weight) of the filling material is 0.01 to 100 % by weight to 100 % by weight of the resin or a resin blend product when the filling material is a carbon filling material (CNT, CF, CB, GF, AB), is 1 to 300 % by weight to 100 % by weight of the resin or the resin blend product when the filling material is a silica filling material or a metal oxide filling material (Al₂O₃, TiO₂, ZnO, CeO₂).

The cocontinuous structure comprising the filling material and the incompatible resin selected from the thermoplastic resin and the thermosetting resin and/or the incompatible elastomer according to any one of claims 1 to 7, wherein at least one system of the filling material is contained selectively in the resin and/or the elastomer.

The cocontinuous structure comprising the filling material and the incompatible resin selected from the thermoplastic resin or the thermosetting resin and/or the incompatible elastomer according to any one of claims 1 to 8, wherein the cocontinuous structure is obtained by putting at least the filling material which is the filler, and the incompatible resin selected from the thermoplastic resin or the thermosetting resin and/or the incompatible elastomer in a cylinder having a screw, through a put-in part provided at an end of a melt-kneading part having a heating part; sending the resin or elastomer that is melt-kneaded under the conditions from a rear end of the screw to a front end of the screw, wherein a rotation speed of the screw is from 100 rpm to 3000 rpm; and a shear rate is from 150 to 4500 sec⁻¹; confining the resin or elastomer in a gap at the front end of the screw; and conducting circulation of moving the resin or elastomer from the gap to the rear end of the screw.

The cocontinuous structure comprising the filling material and the incompatible resin selected from the thermoplastic resin or the thermosetting resin and/or the incompatible elastomer according to any one of claims 1 to 8, wherein at least the filling material which is the filler, and the incompatible resin selected from the thermoplastic resin or the thermosetting resin and/or the incompatible elastomer are put in a cylinder having a screw through a put-in part provided at an end of a melt-kneading part having a heating part and a sealing part; the resin or elastomer that is melt-kneaded under the conditions, wherein an interval between a surface of a front end of the screw and a surface of the sealing part that is located so as to face the surface of the front end is 0.5 to 5 mm; an inner diameter of a hole of the screw is 1 mm to 5 mm; a rotation speed of the screw is 100 rpm to 3000 rpm; a shear rate is 150 to 4500 sec⁻¹; and a heating temperature is a temperature higher than room temperature or a melting point or a glass transition point of the resin and/or the elastomer, is sent from a rear end of the screw to the front end and confined in a gap at the front end of the screw; and then circulation of moving the resin or elastomer from the gap to the rear end of the screw is conducted.

A molded product formed from a cocontinuous structure, wherein molding is conducted after conducting the circulation, of moving the resin or elastomer from the gap to the rear end of the screw according to claim 9 or 10.

A resin molded product, wherein the molded product is formed from the cocontinuous structural body according to claim 11 is in the form of one of a rod, a film, a sheet, and a fiber.

An electrically conductive or thermally conductive material formed from the resin molded product according to claim 12.

An electrode material, for a fuel cell formed from the resin molded product according to claim 12.

An electromagnetic wave absorption material formed from the resin molded product according to claim 12.

### EFFECT OF THE INVENTION

Accordingtothe presentinvention,a melt-kneaded product comprises a filling material and an incompatible resin or elastomer, which forms a cocontinuous structure as an internal structure thereof, and in which the filling material that is a filler is dispersed only in one continuous phase.

An electrically conductive or thermally conductive material, an electrode material for a fuel cell, and an electromagnetic wave absorption material can be obtained from a resin molded product by molding the melt-kneaded product.

### BRIEF DESCRIPTION OF THE DRAWINGS

[FIG. 1] FIG. 1 is a TEM photograph of a sample that was produced by adding a CNT in an amount of 1.8 wt% to a blend product with PVDF/PA6 = 50/50 under the conditions of a screw rotation speed of 1000 rpm; a kneading time of 2 minutes; and a temperature of 240°C.
[FIG. 2] FIG. 2 schematically shows and illustrates the TEM photograph of FIG. 1, showing the difference in structure between samples produced by high-shear molding and low-shear molding.
[FIG. 3] FIG. 3 shows: results of electrical conductivity measurement of samples produced by adding a CNT in an amount of 0 to 6 % to a blend product with PVDF/PA6 = 50/50 ; and electrical conductivity changes of samples produced by adding the same amount of the CNT to PA6 under high shear.
[FIG. 4] FIG. 4 shows stress-distortion curves of samples produced by adding a CNT in an amount of 1.8 wt% to PA6 and a blend product with PVDF/PA6 = 50/50 .
[FIG. 5] FIG. 5 is an overall view for manufacturing a melt-kneaded product and a molded product of an incompatible resin selected from a thermoplastic resin or a thermosetting resin and/or an incompatible elastomer.
[FIG. 6] FIG. 6 illustrates a feedback-type screw of a melt-kneading part of an apparatus in FIG. 5.
[FIG. 7] FIG. 7 illustrates a gap at a front end of the feedback-type screw of the melt-kneading part in the apparatus in FIGS. 4 and 5.

### DESCRIPTION OF THE REFERENCE CHARACTERS

10: melt-kneaded product manufacturing apparatus
12: melt-kneading part
14: molding part
16: material supply part
18: cylinder
20: feedback-type screw
22: bearing
24: shaft
26: heater
28: seal
30: adjustment means for adjusting gap
32: gap
35: heater
36: T-die front edge heater
38: T-die rear edge heater
40: outlet
42: thermocouple
44: hole
46: structure of internal-feedback-type screw
48: rear end of screw
50: front end of screw

### BEST MODE FOR CARRYING OUT THE INVENTION

The present invention relates to a cocontinuous structure comprising a filling material and an incompatible resin selected from a thermoplastic resin or a thermosetting resin and/or an incompatible elastomer. The cocontinuous structure is formed from a binary system that is selected from the incompatible resin selected from the thermoplastic resin or the thermosetting resin and/or the incompatible elastomer. One of the incompatible resin selected from the thermoplastic resin or the thermosetting resin and/or the incompatible elastomer contains the filling material that is a filler.

Its feature is that the structure is a cocontinuous structural body, and that one resin of the incompatible resin contains the filling material that is the filler and the filling material that is the filler is dispersed selectively and uniformly in the one resin of the incompatible resin.

The filling material is 0.01 to 300 % by weight to 100 % by weight of the incompatible resin or the incompatible elastomer.

These resins may contain a crosslinker, a curing agent, a stabilizer, and the like according to need.

The incompatible resin selected from the thermoplastic resin or the thermosetting resin and/or the incompatible elastomer is a blend product of a thermoplastic resin and a thermosetting resin; a blend product of thermoplastic resins; a blend product of a thermoplastic resin and a natural rubber, a synthetic rubber, or a thermoplastic elastomer; or a blend product of natural rubbers, synthetic rubbers, or thermoplastic elastomers.

Specific combinations of the incompatible resin selected from the thermoplastic resin or the thermosetting resin and/or the incompatible elastomer are as follows.
(1) Case of selecting from a thermoplastic resin and a thermosetting resin.
   (i) Blend product of a thermoplastic resin and a thermosetting resin.
   (ii) Blend product of a thermoplastic resin and a thermoplastic resin.
(2) Case of selecting from a thermoplastic resin and a thermoplastic elastomer, a natural rubber or a synthetic rubber.
   (i) Blend product of a thermoplastic resin and a thermoplastic elastomer.
   (ii) Blend product of a thermoplastic resin and a rubber (selected from a natural rubber or a synthetic rubber).
(3) Case of selecting from a thermoplastic elastomer.
   (i) Blend product of a thermoplastic elastomer and a thermoplastic elastomer.
   (ii) Blend product of a rubber (selected from a natural rubber or a synthetic rubber) and a thermoplastic elastomer.
(4) Case of using a rubber (selected from a natural rubber or a synthetic rubber).
   (i) Blend product of rubbers selected from a natural rubber or a synthetic rubber.

Examples of the incompatible resin include a combination of a non-crystalline polymer and a crystalline polymer that are thermodynamically not mixed with each other.

The non-crystalline polymer is dispersed in a non-crystalline layer of the crystalline polymer at the nanometer scale to form a cocontinuous structure.

The non-crystalline polymer usable in the present invention is not particularly limited, and the non-crystalline polymers with desired properties are acceptable. Specifically, examples of the non-crystalline polymer include polymers such as PMMA polymers, polymethyl acrylate (PMA) polymers, polystyrene (PS) polymers, polyvinyl chloride (PVC) polymers, polyvinyl acetate (PVAC) polymers, and polybutadiene polymers.

Further, the crystalline polymer usable in the present invention is also not particularly limited, and various polymers whose crystallinities are identified are selectable. Specific examples of the crystalline polymer include polyethylene polymers, polystyrene polymers, polypropylene polymers, polyester polymers, polyamide polymers, and polycarbonate polymers. Particularly specific examples of the crystalline polymer include known low-density polyethylene (LDPE), known high-density polyethylene (HDPE), syndiotactic polystyrene, polypropylene (PP), polyethylene terephthalate (PET), polylactide (PLLA), polyamide (PA), polyimide (PI), and polycarbonate (PC).

The crystalline polymer includes a crystalline layer and a non-crystalline layer, and its crystallinity and crystal structure can be determined by various known methods. In addition, the crystalline polymer forms a folded crystal of its molecular chain and the folded crystal forms nanometer-scale lamella structures, and the lamella structures form a lamella repeat structure by non-crystalline tie molecules (non-crystalline layer) and further become fibrils with a hierarchical structure in which the fibrils grow to spherocrystals of several micrometers to several millimeters.

A polymer composite according to the present invention has a cocontinuous structure in which a non-crystalline polymer is dispersed on the nanometer scale between the spherocrystals of a crystalline polymer between the microvoids of the fibrils, and between the lamella structures.

Examples of the elastomer and the rubber include diene rubbers and hydrogenated products thereof (e.g., NR, IR, epoxidized natural rubber, SBR, BR (high-cis BR and low-cis BR), NBR, hydrogenated NBR, and hydrogenated SBR), olefin rubbers (e.g., ethylene-propylene rubbers such as ethylene-propylene-diene rubber (EPDM) and EPM), maleic acid-modified ethylene-propylene rubber (M-EPM), IIR, isobutylene-aromatic vinyl or diene monomer copolymers, acrylic rubbers (ACM), ionomers, halogen-containing rubbers (e.g., Br-IIR, CI-IIR, the brominated product (Br-IPMS) of an isobutylene-para-methyl styrene copolymer, CR, hydrin rubber (CHR), chlorosulfonated polyethylene (CSM), chlorinated polyethylene (CM), maleic acid-modified chlorinated polyethylene (M-CM)), silicone rubbers (e.g., methyl vinyl silicone rubber, dimethyl silicone rubber, and methylphenylvinyl silicone rubber), sulfur-containing rubbers (e.g., polysulfide rubber), fluoro rubbers (e.g., vinylidene fluoride rubbers, fluorine-containing vinyl ether rubbers, tetrafluoro ethylene-propylene rubbers, fluorine-containing silicone rubbers, fluorine-containing phosphazene rubbers), urethane rubbers, epichlorohydrin rubbers, elastomers (e.g., styrene elastomers, olefin elastomers, ester elastomers, urethane elastomers, polyamide elastomers).

In an embodiment, the elastomer is specifically described by means of poly(styrene-b-butadiene-co-butylene-b-styrene) (SBBS),poly(styrene-butadiene-styrene) (SBS), ethylene-propylene rubber, or the like, which are non-polar elastomers that do not have any polar groups. The present invention can be similarly practiced with other elastomers. The elastomers are known substances, and commercial products thereof can be purchased and used. SBBS, SBS, and the like are thermoplastic elastomers. Thus, SBBS, SBS, and the like do not need to be crosslinked unlike natural rubber, and have excellentrubber-like elasticity while being easily molded as a general resin.

SBBS, SBS, and the like become melted uniformly to an elastomer and a rubber, and maintain a kneaded state.

Similarly , in the case of this embodiment, the present invention can be practiced with other elastomers and rubbers

When these resins and elastomers are used, a structure is obtained, which has a cocontinuous structure formed from an incompatible resin or elastomer and in which one resin of the incompatible resin contains a filling material that is a filler.

Examples of a blend product of an incompatible thermoplastic resin and an incompatible thermoplastic resin include the following combinations.

When one of the resins is a material with an excellent mechanical strength and further a fuel cell electrode material for which it is assumed that an impermeability to hydrogen gas and oxygen gas and a chemically resistant property in an acidic atmosphere of an electrochemical cell are required, the resins are combined as follows.

Examples of a combination of resins for forming a cocontinuous structure include the following resins. Specifically, the one resin is selected from fluorine polymers such as poly(vinylidene fluoride) (PVDF) with an excellent chemical resistance and a copolymer (VDF/ TrFE) of vinylidene fluoride (VDF) and trifluoroethylene (TrFE), poly(p-phenylene sulfide) (PPS), polysulfone (PSF), polyether sulfone (PES), polyether ether ketone (PEEK), polyarylate (PAR), and the like. The other resin for forming a continuous phase is selected from polyamide 6 (PA6), polyamide 66 (PA66), polyamide 46 (PA46), polyamide 11 (PA11), and the like, which have a high compatibility with filling materials such as a filler.

For example, there is a combination (1) of poly (vinylidene fluoride)(PVDF) and polyamide 6 (PA).

In the case of the combination (1) of PVDF and PA6, PA6 is 10 to 70 % by weight while PVDF is 90 to 30 % by weight.

In the above range, when PA6 is 20 to 60 % by weight while PVDF is 80 to 40 % by weight, a more desirable result can be obtained.

As poly(vinylidene fluoride) (PVDF), a generally-known one can be used as appropriate, and KF850 with an excellent crystallinity, available from KUREHA CORPORATION, can be used.

As polyamide 6 (PA6), a generally-known one can be used as appropriate, and A1030BRL available from UNITIKA, LTD. can be used.

As the filling material, an electrically conductive substance and a thermally conductive substance, and further a substance with excellent heat resistance and dynamic performance and a substance with a photo-oxidation catalyst function, can be used. When these fillingmaterials are used, the resultant structure can be used as an electrically conductive or thermally conductive material, further as a material in which a resin or an elastomer has remarkably excellent heat resistance and dynamic performance, and as a material with a photo-oxidation catalyst function.

As the filling material, (1) a carbon filling material, (2) a silica filling material, and (3) a metal oxide filling material, are used.
(1) The carbon fillingmaterial is known as an electrically conductive substance and a thermally conductive substance.
   The carbon filling material is selected from a carbon nanotube (CNT), a carbon fiber (CF), a carbon black (CB), graphite (GF), or acetylene black (AB).
(2) The silica filling material is known as a substance with excellent heat resistance and dynamic performance.
   The silica filling material is selected from a clay fine particle (layer silicate), a silica fine particle, a cage polysilsesquioxane (POSS) compound, and the like.
(3) The metal oxide fillingmaterial is known as a substance with an excellent thermally conductive property, an excellent photo-oxidation catalyst function, an excellent heat resistance, and the like.

The metal oxide filling material is selected from Al₂O₃, TiO₂, ZnO, CeO₂, and the like.

A filling material composed of a combination of two or three of these filling materials, can be used.

The added amount (% by weight) of the filling material is 0.01 to 100 % by weight to 100 % by weight of the resin or the resin blend product when the filling material is the carbon filling material (CNT, CF, CB, GF, AB), and is 1 to 300 % by weight to 100 % by weight of the resin or the resin blend product when the filling material is the silica filling material or the metal oxide filling material (Al₂O₃, TiO₂, ZnO, CeO₂).

Regarding the sizes of these filling materials, filling materials having a size of several nanometers to several tens of nanometers, are generally used.

When an incompatible resin or elastomer is melt-kneaded in the presence of an electrically conductive filler, a cocontinuous structure can be caused to appear, in which the electrically conductive filler is contained in one of the incompatible resin or elastomer in a uniformly dispersed state and the electrically conductive filler is not contained in the other incompatible resin or elastomer.

In other words, when the filler is a substance having characteristics, such as a thermally conductive property and an electromagnetic wave absorbability other than or in addition to an electrically conductive property, a novel cocontinuous structure can be obtained, which includes the incompatible resin or elastomer and has characteristics corresponding to these characteristics.

When the incompatible resin or elastomer comprising a material with an excellent mechanical strength, or further a material with an excellent chemical resistance,or an impermeability to hydrogen gas and oxygen gas, or a chemically resistant property in an acidic atmosphere of an electrochemical cell are used, one of the phases is formed from a polymer with an excellent chemical resistance, and the other phase is formed from a polymer with similarly an excellent chemical resistance and an excellent compatibility with the filler. Therefore, the filler is dispersed selectively only in the other phase. By forming such a cocontinuous structure having different roles, a novel electrode structure for a fuel cell can be obtained.

In any of the above cases, the characteristics provided by the additive, such as an electrically conductive property, can be improved with an added amount of the filler smaller than the amount of the filler dispersed in a single polymer (resin). For example, when the composition of a polymer blend product is 50/50, the added amount of the filler can be half because the filler is incorporated only into one of the phases. In other words, the same effects (e.g., reach to the same level of the electrically conductive property) appear with half of the added amount of the filler.

Carbon nanotube is as follows.

In general, CNTs are produced by the arc discharge method, chemical vapor deposition (CVD), the laser ablation method, or the like. CNTs produced by any methods and having a bundle structure can be used in the present invention. Carbon nanotubes include single-walled carbon nanotubes (SWCNTs) in which one carbon film (graphene sheet) is cylindrically wound, and multi-walled carbon nanotubes (MWCNTs) in which a plurality of graphene sheets are concentrically wound. In the present invention, SWCNTs in which a bundle structure is particularly easily formed, are used, but are effective as a method of separating aggregated MWCNTs.

When SWCNTs and MWCNTs are produced, fullerenes, graphites, non-crystalline carbons are produced as by-products at the same time, and catalyst metals such as nickel, iron, cobalt, and yttrium also remain as impurities. Thus, these impurities are preferably removed for purification. For the removal of these impurities, a removal of the metal impurities by dissolving with dilute hydrochloric acid or the like is effective, and a combination with separation by a filter is preferred in light of improvement of the purity.

In the present invention, ultrasonic irradiation is conducted on a CNT with a bundle structure in a conjugated polymer solution, whereby the CNTs can be individually separated from the bundle. As a solvent for the polymer that is used here, solvents in which the above linear conjugated polymers are soluble, such as methanol, toluene, xylene, and chloroform, are preferably used. The ultrasonic irradiation is conducted using an ultrasonic generator such as an ultrasonic washing machine and an ultrasonic breaker. The ultrasonic irradiation time depends on the output power of the used ultrasonic generator, but the irradiation is conducted for about several minutes to 20 hours. The output power of the used ultrasonic generator is preferably from about 100 W to 500 W.

A CNT can be selected as appropriate and used. Specifically, a multi-walled carbon nanotube (CNT) available from CNT Co. Ltd. (Korea) can be used without any changes.

The outer diameter of the CNT is 10 to 40 nm, its length is 5 to 20 µm, and its purity is 95% or more.

A SWCNT (single-walled carbon nanotube, available from SCIENCE LABORATORIES, INC., purity: 95%) can be used.

For producing a polymer composite in which a CNT is dispersed in a polymer, it is important to disperse the CNT in the polymer in a desired manner. However, generally, CNTs are difficult to disperse, but the surfaces of SWCNTs obtained by the above treatment are coated with the polymer. Thus, dispersibility in the polymer can be improved. In addition, when a conjugated polymer is used as the coating polymer, there is an advantage that movements of electrical charges are not disturbed.

As a radio wave absorption material, a material in which a radio wave absorptive substance is added as a filling material in a resin, is used.

Specifically, soft ferrites such as ferrite particles, Mn-Zn ferrite, Ni-Zn ferrite, Mn-Zn ferrite, Cu-Zn ferrite, Mn-Mg ferrite, and Li-2n ferrite, iron, nickel, cobalt, and iron alloys such as Fe-Co, Fe-Cr, Fe-Si, Fe-Al, Fe-Cr-Al, Fe-Si-Cr, Fe-Si-Al, Fe-Al-Si, permalloy, and carbonyl iron, can be used.

These soft magnetic powders can be used singly, or two or more thereof can be used in combination.

Ferrite particles, for example, Ni-Zn ferrite adjusts the loaded amount and the particle diameter, and Mn-Zn ferrite exhibits a high magnetic loss µ in high frequencies of 50 MHz to 3 GHz. Thus, they are often used as a radio wave suppression sheet for this frequency band. Therefore, in order to enhance a radio wave absorption function in the near-field, an energy conversion effect by magnetic loss needs to be enhanced, and it is important to highly load the ferrite particles.

For example, spherical ferrite particles for radio wave absorption materials are known, which are made from a ferrite represented by the structural formula, (MO) 100-X(Fe2O3)X, (it is noted that M is at least one metal selected from Li, Mg, Ni, Cu, Zn, Mn, Co, Zr, Sn, Ca, and Fe, and X is 45 to 90 mole %) and which have an average particle diameter of 1 to 45 µm, a BET specific surface area of 0.2 m²/g or less, a pore volume of 0.04 ml/g or less, which is measured by the mercury intrusion method (Japanese Laid-Open Patent Publication No. 2003-318015).

Spherical ferrite particles for radio wave absorption materials are known, which have a volume specific resistance of 5.0 × 109 Ωcm or greater at 120°C and a volume specific resistance of 3.0 × 1011 Ωcm or greater at 25°C, and which have a shpherical particle shape, an average particle diameter of 5.0 to 50 µm, a soluble ion content of 5.0 ppm or less, and a garnet crystalline structure (Japanese Laid-Open Patent Publication No. 2005-139050).

For melt-kneading a mixture of PVDF and PA6 which are used in the present invention, and further a CNT which is the filling material, a method by dry blending in which the mixture is mixed in the form of particles can be used. The dry blending is conducted after a sample is dried in vacuum at 80°C for 12 hours.

The structure according to the present invention comprises a cocontinuous structure formed from an incompatible resin or elastomer, and in which at least one system of a filling material that is a filler in one resin of the incompatible resin is contained selectively in the incompatible resin and/or elastomer. The biggest factor that makes this possible is that the cocontinuous structure formed from the incompatible resin or elastomer can be caused to appear by using a melt-kneading method. Its contents are as follows.

A method of the present invention is carried out by using the internal-feedback-type and minute-quantity-type high-shear molding machine that has been invented by the inventors of the present invention and others (Japanese Laid-Open Patent Publication No. 2005-313608) .

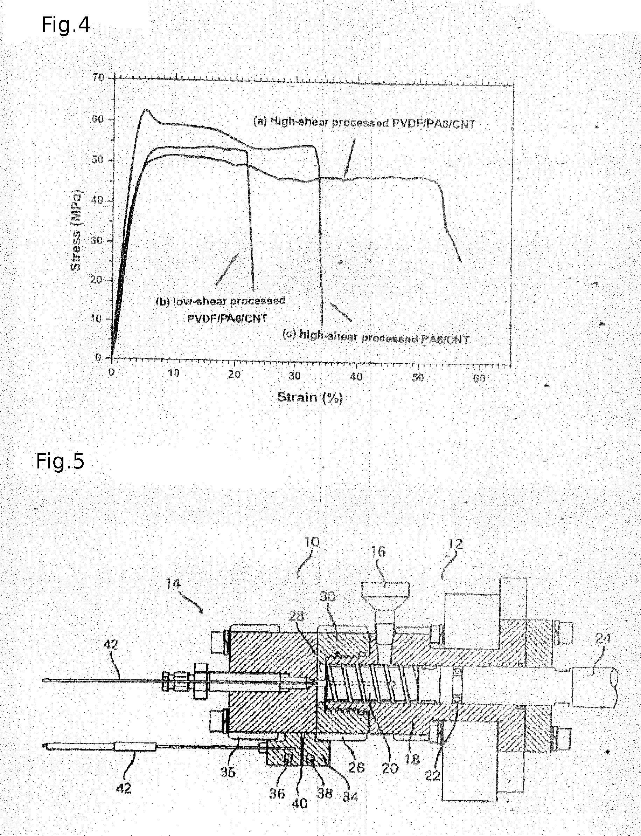

Regarding an apparatus used in the present invention, FIG. 5 is an overall view for manufacturing a melt-kneaded product and a molded product of an incompatible resin selected from a thermoplastic resin or a thermosetting resin and/or an incompatible elastomer.

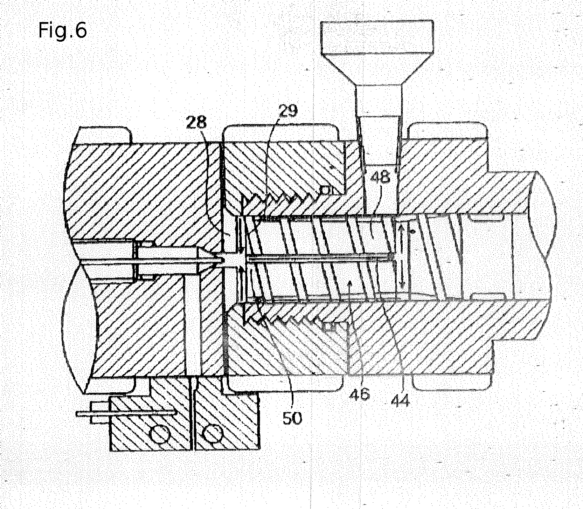

FIG. 6 illustrates a feedback-type screw of amelt-kneading part of the apparatus in FIG. 5.

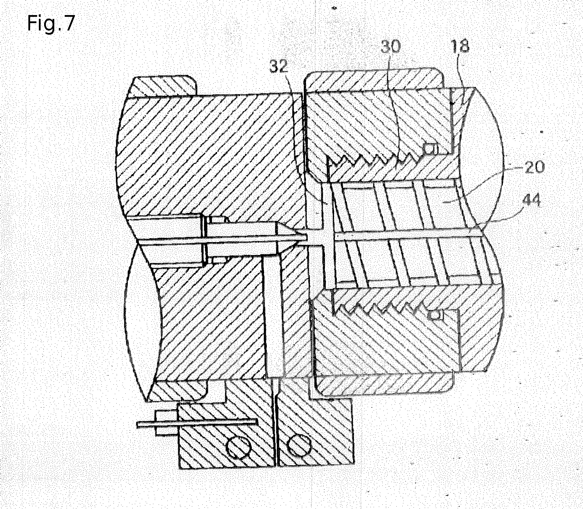

FIG. 7 illustrates a gap at a front end of the feedback-type screw of the melt-kneading part of the apparatus in FIGS. 4 and 5.

A raw materials are sent from a rear end 48 of the screw to the front end 50 of the screw and confined in a gap 32 at the front end of the screw. The melt-kneaded product manufacturing apparatus 10 includes a material put-in part 16 for the filling material made from the filler and the incompatible resin or elastomer which are the raw materials; a melt-kneading part 12; and a molding part 14.

The melt-kneading part 12 has a feedback-type screw 20 (hereinafter, may be referred to merely as screw 20) in a cylinder 18. The screw 20 is disposed in the cylinder 18 via a shaft 24 (FIG. 5). The filling material and the incompatible resin or elastomer pass through a gap 46 between the cylinder and the screw (FIG. 6), and the incompatible resin or elastomer is melt and kneaded with the filling material. The shaft 24 is connected to the screw 20 via a bearing 22. In addition, in the cylinder 18, a heater 26 for melting the incompatible resin or elastomer is provided along the external side of the cylinder (FIG. 7). In the cylinder 18, a sealing part 28 for sealing between the melt-kneading part 12 and the molding part 14 is provided at the end of the cylinder 18 opposite to the location of the shaft 24.

Further, in the cylinder 18, the gap 32 is provided between the front end 29 of the screw and the sealing part 28. The gap 32 is adjustable in the range of 0.5 mm to 5 mm by an adjustment means 30 for adjustment (FIGS. 6 and 7).

The screw 20 has a structure sufficient for melting the incompatible resin or elastomer within the cylinder 18. FIG. 6 shows the gap 46 between the cylinder and the screw. The incompatible resin or elastomer supplied from the material put-in part 16 moves with the filling material from the rear end 48 of the screw toward the front end 50 of the screw through the gap 46 between the cylinder and the screw. The melted incompatible resin or elastomer is confined with the filling material in the gap 32 formed between the front end 29 of the screw and the sealing part 28. Melt-kneading is continued while the melted incompatible resin or elastomer with the filling material passes through a laterally-extending hole 44 provided in the central portion of the screw, and through a hole provided in a different direction, and moves again toward the front end 50 of the screw through the rear end 48 of the screw.

The melt-kneaded incompatible resin or elastomer is taken out with the filling material from the gap 32 through a valve (not shown) to the molding part 14, and molding is conducted.

The molding part 14 has an extruding part heater 35 and a T-die 34 for manufacturing a film. The T-die 34 has a T-die front edge heater 36 and a T-die rear edge heater 38. An extruded molded product passes through an outlet 40 formed between the T-die front edge heater 36 and the T-die rear edge heater 38. Thermocouples 42 for temperature measurement are inserted in the molding part and the T-die front edge heater 38, respectively. The results of the measurement are sent to a controller (not shown), and the controller adjusts the temperatures of the melt-kneading part 12 and the T-die. As molded product as rods, films, sheets, and fibers can be obtained.

The time period required for shear melting is changeable in accordance with the time period required for passing through the gap 46 between the cylinder and the screw. The degree to which the incompatible resin or elastomer is sheared can be changed by changing the gap formed between the screw rear end and the surface of the sealing part that connects the screw rear end and the interior of the screw. The degree to which the incompatible resin or elastomer is sheared can be increased by narrowing the gap and/or reducing the diameter of the hole. The gap and the inner diameter of the hole of the screw need to be optimum in light of viscosity of the incompatible resin or elastomer. The time period required for melt-kneading the incompatible resin or elastomer contained in the cylinder is 1 minute to 8 minutes.

In the present invention, the apparatus is used under the following conditions.
(1) The cocontinuous structure according to the present invention comprising the filling material and the incompatible resin selected from the thermoplastic resin or the thermosetting resin and/or the incompatible elastomer is obtained by putting at least the filling material which is the filler, and the incompatible resin selected from the thermoplastic resin or the thermosetting resin and/or the incompatible elastomer in the cylinder (18) having the screw (20) through the put-in part (16) that is provided at an end of a melt-kneading part having a heating part; sending the resin or elastomer that is melt-kneaded under the conditions where the rotation speed of the screw (20) is 100 rpm to 3000 rpm; and the shear rate is 150 to 4500 sec⁻¹, from the rear end (48) of the screw to the front end (50) of the screw; confining the resin or elastomer in the gap (32) at the front end of the screw; and conducting circulation of moving the resin or elastomer from the gap to the rear end (48) of the screw.
   Further, a more excellent result can be obtained by doing as follows.
(2) The cocontinuous structure according to the present invention comprising the filling material and the incompatible resin selected from the thermoplastic resin or the thermosetting resin and/or the incompatible elastomer is obtained by: putting at least the filling material which is the filler, and the incompatible resin selected from the thermoplastic resin or the thermosetting resin and/or the incompatible elastomer in the cylinder (18) having the screw (20) through the put-in part (16) that is provided at the end (58) of the melt-kneading part having the heater (26) and the sealingpart (28) ; sending the resin or elastomer that is melt-kneaded under the conditions where the interval between the surface of the front end (50) of the screw and the surface of the sealing part (28) that is located so as to face the surface of the front end (50) is 0.5 to 5 mm; the inner diameter of the hole (44) of the screw is 1 mm to 5 mm; the rotation speed of the screw is 100 rpm to 3000 rpm; the shear rate is 150 to 4500 sec⁻¹; the heating temperature is a temperature higher than room temperature or the melting point or the glass transition point of the resin or elastomer,from the rear end (48) of the screw to the front end (50) of the screw; confining the resin or elastomer in the gap (32) at the front end of the screw; and conducting circulation of moving the resin or elastomer from the gap to the rear end of the screw.

The circulation of moving the resin or elastomer from the gap to the rear end of the screw is conducted by moving the resin or elastomer from the gap (32) to the end (58) of the melt-kneading part through the hole (44) that is provided in the central portion of the screw.

The heating temperature under "under a temperature higher than room temperature or the melting point or the glass transition point of the resin or elastomer" means that, when room temperature is higher than "the temperature of the melting point of the resin or of the glass transition point of the elastomer", room temperature is used.

Further, it means that, when room temperature is lower, "a temperature higher than the melting point of the resin or the glass transition point of the elastomer" is used.

It means that, when a resin and a resin are used, a temperature higher than the melting points of the resins is used.

When a resin and an elastomer are used, a higher temperature of the melting point of the resin and the glass transition point of the elastomer is used.

When an elastomer and an elastomer are used, a temperature higher than a higher glass transition point of the glass transition points of the elastomers is used. The same is true when an elastomer and a rubber are used, or when a rubber and a rubber are used.

This setting temperature is required to achieve "a cocontinuous structure of the present invention in which one of an incompatible resin selected from a thermoplastic resin or a thermosetting resin and/or an incompatible elastomer contains a filling material that is a filler".

In the minute-quantity-type high-shear molding machine with the internal-feedback-type screw, the intensity of a shear flow field and the degree of kneading can be changed by adjusting the gap between the cylinder front end and the sealing part in which a blend product is loaded, or by adjusting the inner diameter of the internal-feedback-type screw. Generally, the gap can be set at any value in the range of 1 mm to 5 mm and changed at an interval of 0.5 mm, and the screw inner diameter also can be set at any value in the range of 1 ∅ to 5 ∅ and changed at an interval of 0.50 ∅. When the gap and the inner diameter of the internal-feedback-type screw are set at 1 to 2 mm and at 2.5 ∅, respectively, a more desirable result can be obtained.

The cocontinuous structure obtained by the present invention, which includes the filling material and the incompatible resin selected from the thermoplastic resin or the thermosetting resin and/or the incompatible elastomer, will be described.

PVDF and PA6 are incompatible with each other. In order to obtain a blend product of them, generally, both are mixed using a twin-screw melt-kneading extruder (or a molding machine) at 240°C near their melting points. However, when a general molding machine is used, the degree to which the melt viscosity of the resin are changed is low because the shear rate is 100 sec⁻¹ or less. Thus, the viscosity ratio between blends cannot be charged greatly. Therefore, a nano-scale PA6 phase cannot be formed in a PVDF phase.

According to the research conducted by the inventors of the present invention and others, a mixture of PVDF and PA6, and further a CNT that is a filling material, is melt-kneaded at 240°C near the melting points by using a minute-quantity-type high-shear molding machine instead of a general twin-screw kneading machine, thereby forming a cocontinuous structure as an internal structure of a melt-kneaded product and forming a nano-scale PA6 phase in a PVDF phase. Further, the CNT is nano-dispersed only in the PA6 phase with a high density.

A cocontinuous structure includes a filling material and an incompatible resin or elastomer, in which one resin of the incompatible resin contains the filling material that is a filler, and the filling material that is the filler is uniformly dispersed. And structure can be identified as follows.

A melt-kneaded product obtained by the melt-kneading method can be obtained under the above preferable conditions, as a composition in which a cocontinuous structure is formed as an internal structure of the melt-kneaded product.

Regarding this contents, the resin molded products manufactured using the melt-kneaded product, and fine structures as their internal structures are observed using a transmission electron microscope (TEM).

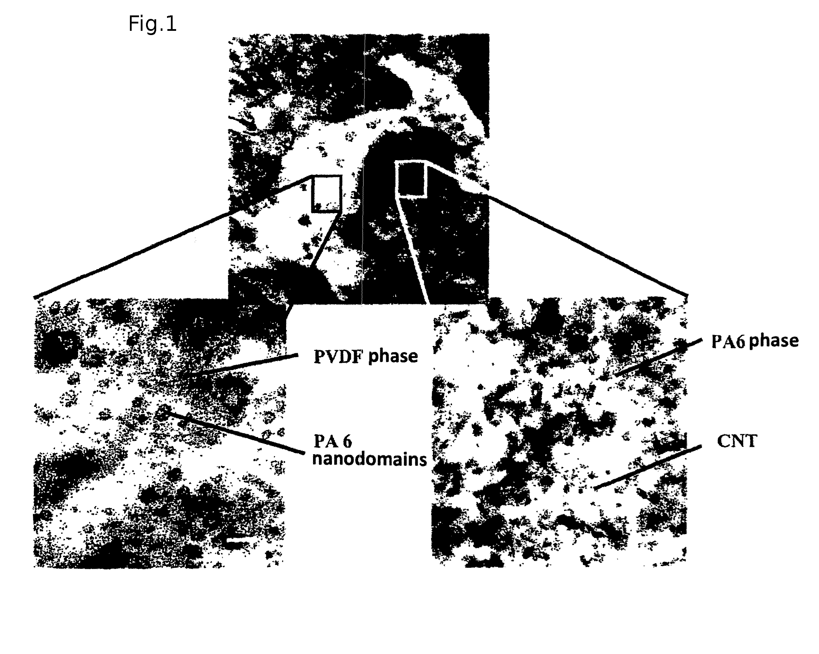

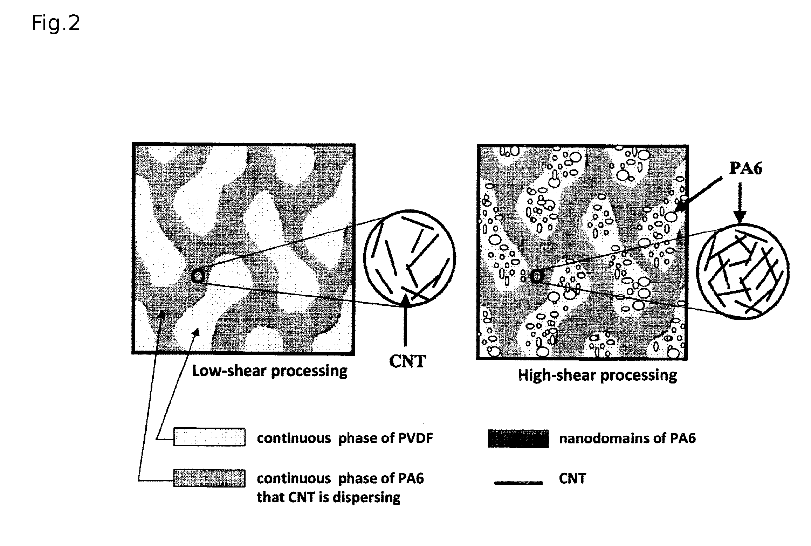

In FIGS. 1 and 2 showing results of Example 1, the following can be recognized.

The melt-kneaded product forms a cocontinuous structure, in which the PVDF phase and the PA6 phase form continuous phases each other as its microscopic structure. In addition, due to high-shear kneading, the melt-kneaded product has a structure in which a substantial portion of the PA6 phase is incorporated as nanodomains into the PVDF phase, while the PVDF phase and the PA6 phase form the cocontinuous structure each other. Further, as a result, the density of the CNT located only in the PA6 phase is much higher than that of a product obtained by low-shear kneading (screw rotation speed: 100 rpm).

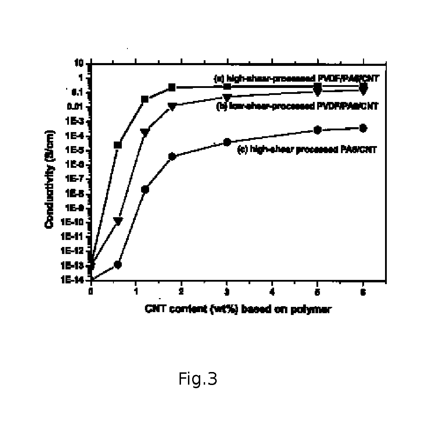

In FIG. 3 showing results of Example 3, the following can be recognized.

When a CNT is dispersed in PA6, addition of 2% or more of the CNT is required in order that the CNT come into contact with each other for nano-dispersing the CNT in the entire resin and improving the electrically conductive property. In order to increase the electrically conductive property further in this system, addition of a large amount of the CNT is further required. On the other hand, in a PVDF/PA6/CNT sample obtained by low-shear molding, a cocontinuous structure is formed and the CNT is located only in the PA6 phase. Thus, with an amount of the CNT smaller than that in the case of dispersing the CNT in PA6, the electrically conductive property is improved. In addition, in a PVDF/PA6/CNT sample obtained by high-shear molding (screw rotation speed: 1000 rpm), a substantial portion of the PA6 phase, which is one continuous phase, is incorporated as nanodomains into the PVDF phase. Thus, the electrically conductive property is improved drastically with a smaller amount of the CNT, because the dispersion density of the CNT increases even when the added amount of the CNT is the same as that in the low-shear sample. Further, a threshold from electrically insulating property to electrically conductive property at this system in the high-shear-molded sample is about 0.85% that is a very low value. Moreover, the sample has the low threshold, and the absolute value of the electrical conductivity of the sample is high when the added amount of the CNT is increased, and the sample achieves an electrical conductivity of 10⁻¹ S/cm or more.

After the structure comprising the filling material and the incompatible resin or elastomer is manufactured, a moldedproduct comprising the filling material and the incompatible resin or elastomer can be obtained by withdrawing the structure from the T-die and molding the structure.

In particular, when the filling material is a CNT, the resultant product becomes a suitable material as an electrically conductive material and a thermally conductive material.

The molded product is formed from various resins described above.

The resin molded product is in the form of one of a rod, a film, a sheet, and a fiber. The resin molded product has, as a microscopic structure thereof, a cocontinuous structure in which the PVDF phase and the PA6 phase forms continuous phases each other. By using the resin molded product, an electrode material for a fuel cell is formed.

In a polymer blend product forming a cocontinuous structure, the each continuous phases are caused to have different roles, one of the phases is formed from a polymer (e.g., PVDF) with an excellent chemical resistance, and the other phase is formed from a polymer (e.g., PA6) with similarly an excellent chemical resistance and an excellent compatibility with a filler (e.g., CNT), thereby dispersing the filler selectively only in the other phase. By forming such a cocontinuous structure having different roles, drastic improvement of the electrically conductive property become successful. In addition,whenthe high-shear molding methodisused, the PA6 phase can be incorporated as nanodomains into the PVDF phase, and the density of the CNT dispersed in the PA6 phase can be increased greatly, resulting in a success in improving the electrically conductive property with a smaller added amount of the CNT.

Similarly, when the above electromagnetic wave absorbent is selected as a filling material, an electromagnetic wave absorption material formed from a resin molded product can be obtained.

Next, the present invention will be described in greater detail by means of Examples. Fine observation, electrical conductivity measurement, and dynamic measurement, shown in the Examples, were conducted as follows.

### Fine Structure Observation

Observation of fine structures such as a cocontinuous structure and a nano-dispersion structure was conducted using a transmission electron microscope (TEM). An ultra-thin piece (thickness: 70 nm) was previously prepared as a sample, stained with a staining reagent (Ru04) for 10 minutes, and observed.

Hitachi H-700 was used as a measuring apparatus, and the measurement was conducted at an acceleration voltage of 75 kV.

### Electrical Conductivity Measurement

The electrically conductive property (electrical conductivity) of a sample according to the present invention was measured in a low electrical conductivity region (10⁻⁸ S/cm or less) and in a high electrical conductivity region (10⁻⁸ S/cm or more) by using the following apparatuses.

The measurement in the high electricalconductivity region was conducted by the four-point probe method.
- Low electrical conductivity region: Advantest R8340 ultra-high resistivity measuring apparatus
- High electrical conductivity region: Loresta-GP MCP-T600

### Dynamic Measurement

The dynamic performance of a sample was evaluated by measurement of a stress-strain curve. The sample was cut into a dumbbell shape, and a stress-strain curve was measured using Tensilon UMT-300, available from Orientec Co., Ltd., under a certain environment (a temperature of 20°C, a relative humidity of 50%) at a speed of 5 mm/min.

### Example 1

As poly(vinylidene fluoride) (PVDF) that is one of the raw materials, KF850 available from KUREHA CORPORATION was used. As polyamide 6 (PA6), A1030BRL available from UNITIKA, LTD. was used.

Further, as a CNT, a multi-walled carbon nanotube (CNT) available from CNT Co., Ltd. (Korea) was used. These materials were preliminarily dried in vacuum at 80°C for 12 hours, and then dry-blended in a predetermined proportion.

Dry blends were obtained with a blend composition and a CNT added amount, in which PA6 is 10 to 70 % by weight while PVDF is 90 to 30 % by weight, PA6 is 20 to 60 % by weight while PVDF is 80 to 40 % by weight, and the CNT is added in an amount of 0.1 to 30 % by weight in the range of 0.01 to 300 % by weight to 100 % by weight of a blend product.

Next, about 5 g of each dry blend product was put in the minute-quantity-type high-shear molding machine, wherein the gap and the inner diameter of the internal-feedback-type screw were set at 1 to 2 mm and at 2.5 ∅, respectively. The dry blend product was heated and melted to 240°C and kneaded (screw rotation speed: 100 rpm and 1000 rpm, kneading time: 2 minutes), and then extruded from the T-die.

As a result, extruded products with an excellent surface condition were obtained. The internal structures of the extruded products were observed by using the TEM.

Subsequently, the extruded products were hot-pressed into uniform films (a thickness of 200 µm), and the electrical conductivity and dynamic performance (stress-strain curves) of these film-shaped samples were evaluated.

### Example 2

FIG. 1 shows the result of TEM observation of the internal structure of a sample produced in Example 1 in which 1.8 wt% of the CNT was added to a blend product of PVDF/PA6 = 50/50.

In the TEM photograph on the upper side, it appears, due to the degree of staining that a whitish less-stained phase (PVDF) and a black-stained phase (PA6) form continuous phases each other to cause a cocontinuous structure. Further, the following becomes clear from this photograph.

In the melt-kneaded product, a cocontinuous structure is formed in which the PVDF phase and the PA6 phase form continuous phases as its microscopic structure.

Further, the melt-kneaded product forms a structure in which a substantial portion of the PA6 phase is incorporated as nanodomains into the PVDF phase due to high-shear kneading while the PVDF phase and the PA6 phase form the cocontinuous structure. In addition, as a result, it can be recognized that the density of the CNT located only in the PA6 phase is much higher than that of a low-shear-kneaded product.

In the right-side enlarged view in FIG. 1, it can be recognized that the CNT exists uniformly with a high concentration in the PA6 phase.

In the left-side enlarged view in FIG. 1, the PVDF phase exists but the CNT does not exist.

It can be recognized that an objective product of the present invention is the cocontinuous structure comprising the incompatible resin or elastomer, and one resin of the incompatible resin contains the filling material that is the filler.

In this TEM photograph, it is difficult to understand the fine structure, and hence a schematic drawing of the structure is shown in FIG. 2. Specifically, due to addition of 1.8 wt% of the CNT, a cocontinuous structure is formed in the blend product with PVDF/PA6 = 50/50 . However, marked difference of the structure state between the high-shear-molded sample and the low-shear-molded sample was observed in the following points.

It is noted that the left side shows a state in the case where low-shear processing was conducted.

Further, in FIG. 2 (right side), it is shown that the CNT exists uniformly with a high concentration in the case of high-shear processing (in the case of the present invention).

Due to high-shear molding, nanometer-scale PA6 nanodomains are densely formed in the PVDF phase.

Due to high-shear processing, a substantial portion of the PA6 phase, which is one continuous phase, is incorporated as nanodomains into the PVDF phase, and hence the dispersion density of the CNT in the high-shear molded sample is much higher.

On the other hand, in the case of low-shear processing (in the case of conventional melt-kneading) in FIG. 2 (left side), merely a few of the CNTs exist, and the effects of the present invention cannot be obtained.

### Example 3

FIG. 3 shows the result of electrical conductivity measurement of samples produced in Example 1 in which 0 to 6% of the CNT was added to blend products with PVDF/PA6 = 50/50. For the purpose of comparison, FIG. 3 also shows a change of the electrical conductivity of a sample in which the same amount of the CNT was dispersed in PA6 by high-shear kneading. When electrical conductivity changes of these three types of samples are compared with each other, it should be understood that, by reflecting a special fine structure formed by high-shear molding, an excellent electrical conductivity is exhibited.

The results are shown in FIG. 3. It is noted that the electrical conductivity change of the sample produced under high shear with the same amounts of the CNT added to PA6, is also shown for the purpose of comparison.

FIG. 3 shows an electrical conductivity change (indicated by ■-■) of a PVDF/PA6/CNT sample produced by high-shear molding (screw rotation speed: 1000 rpm), an electrical conductivity change (indicated by ▼-▼) of a PVDF/PA6/CNT sample produced by low-shear molding (screw rotation speed: 100 rpm), an electrical conductivity change (indicated by •-•) of a PA6/CNT sample produced by high-shear molding (screw rotation speed: 1000 rpm).

In other words, when a CNT is dispersed in PA6, addition of 2% or more of the CNT is required for the CNTs to come into contact with each other in order to nano-disperse the CNT in the entire resin and in order to improve the electrically conductive property. In order to increase the electrically conductive property further in this system, addition of a large amount of the CNT is further required. On the other hand, in the low-shear-molded PVDF/PA6/CNT sample, a cocontinuous structure is formed and the CNT is located only in the PA6 phase as shown in FIG. 2. Thus, the electrically conductive property is improved with an amount of the CNT smaller than that in the case of dispersing the CNT in PA6. In addition, in the high-shear-molded PVDF/PA6/CNT sample, a substantial portion of the PA6 phase, which is one continuous phase, is incorporated as nanodomains into the PVDF phase as shown in FIGS. 1 and 2. Thus, it should be understood that the electrically conductive property is improved drastically with a smaller amount of the CNT, because the dispersion density of the CNT increases even when the added amount of the CNT is the same as that in the low-shear sample.

In particular, a threshold from electrically insulating property to electrically conductive property in this system of the high-shear-molded sample is about 0.85% at a very low value. Moreover, in ddition to the low threshold, the absolute value of the electrical conductivity of the sample is high when the added amount of the CNT is increased, and the sample achieves an electrical conductivity of 10⁻¹ S/cm or more.

### Example 4

FIG. 4 shows stress-strain curves of samples produced in Example 2.

FIG. 4 shows a stress-strain curve of each sample obtained by adding 1. 8 wt% of the CNT to PA6 and a blend product with PVDF/PA6 = 50/50.

PVDF/PA6/CNT HS shows a stress-strain curve of a PVDF/PA6/CNT sample produced by high-shear molding (screw rotation speed: 1000 rpm).

PVDF/PA6/CNT LS shows a stress-strain curve of a PVDF/PA6/CNT sample produced by low-shear molding (screw rotation speed: 100 rpm).

PA6/CNT HS shows a stress-strain curve of a PA6/CNT HS sample produced by high-shear molding (screw rotation speed: 1000 rpm).

Originally, PA6 has an excellent mechanical elongation (elongation at break), but the mechanical elongation decreases when a CNT is added and dispersed in PA6. However, as is also clear from FIG. 4, the high-shear-molded PVDF/PA6/CNT sample (named as HS) exhibits an elongation at break of about 53%, in comparison with that of the low-shear-molded sample (named as LS) and that of the PA6/CNT sample.

As described above, the high-shear-molded PVDF/PA6/CNT sample has excellent mechanical properties as well as an excellent electrical conductivity.

### INDUSTRIAL APPLICABILITY

The cocontinuous structure of the present invention is formed from the binary system selected from the incompatible resin selected from the thermoplastic resin or the thermosetting resin and/or the incompatible elastomer, and in which one of the incompatible resin selected from the thermoplastic resin or the thermosetting resin and/or the incompatible elastomer contains the filling material that is the filler , and a filling material having an action different from that of the filling material used in the present invention is applicable to obtain a new cocontinuous structure.

## Claims

1. A cocontinuous structure comprising a filling material, and an incompatible resin selected from a thermoplastic resin or a thermosetting resin and/or an incompatible elastomer, the cocontinuous structure formed from a binary system that is selected from the incompatible resin selected from the thermoplastic resin or the thermosetting resin and/or the incompatible elastomer, wherein
one of the incompatible resin selected from the thermoplastic resin or the thermosetting resin and/or the incompatible elastomer contains the filling material that is a filler.

2. The cocontinuous structure comprising the filling material and the incompatible resin selected from the thermoplastic resin or the thermosetting resin and/or the incompatible elastomer according to claim 1, wherein the filling material that is the filler is dispersed selectively and uniformly in the one of the incompatible resin selected from the thermoplastic resin or the thermosetting resin and/or the incompatible elastomer.

3. The cocontinuous structure comprising the filling material and the incompatible resin selected from the thermoplastic resin or the thermosetting resin and/or the incompatible elastomer according to claim 1 or 2, wherein the filling material is 0.01 to 300 % by weight to 100 % by weight of the incompatible resin or elastomer.

4. The cocontinuous structure comprising the filling material and the incompatible resin selected from the thermoplastic resin or the thermosetting resin and/or the incompatible elastomer according to any one of claims 1 to 3, wherein the incompatible resin selected from the thermoplastic resin or the thermosetting resin and/or the incompatible elastomer is a blend product of a thermoplastic resin or a thermosetting resin; a blend product of thermoplastic resins; a blend product of a thermoplastic resin and a natural rubber, a synthetic rubber, or a thermoplastic elastomer; or a blend product of natural rubbers, synthetic rubbers, or thermoplastic elastomers.

5. The cocontinuous structure comprising the filling material and the incompatible resin selected from the thermoplastic resin or the thermosetting resin and/or the incompatible elastomer according to any one of claims 1 to 4, wherein a blend product of the incompatible thermoplastic resins is a blend product of one combination of poly(vinylidene fluoride) (PVDF), a copolymer (VDF/TrFE) of vinylidene fluoride (VDF) and trifluoroethylene (TrFE), poly (p-phenylene sulfide) (PPS), polysulfone (PSF), polyether sulfone (PES), polyether ether ketone (PEEK), or polyarylate (PAR), with a polymer selected from polyamide 6 (PA6), polyamide 66 (PA66), polyamide 46 (PA46), and polyamide 11 (PA11).

6. The cocontinuous structure comprising the filling material and the incompatible resin selected from the thermoplastic resinor the thermosetting resin and/or the incompatible elastomer, according to any one of claims 1 to 5, wherein the filling material is a carbon filling material selected from a carbon nanotube (CNT), a carbon fiber (CF), a carbon black (CB), graphite (GF), and acetylene black (AB); a silica filling material selected from a clay fine particle (layer silicate), a silica fine particle, and a cage polysilsesquioxane (POSS) compound; or a metal oxide filling material selected from alumina (Al₂O₃), titanium dioxide (TiO₂), zinc oxide (ZnO), and cerium dioxide (CeO₂).

7. The cocontinuous structure comprising the filling material and the incompatible resin selected from the thermoplastic resin or the thermosetting resin and/or the incompatible elastomer according to any one of claims 1 to 5, wherein the added amount (% by weight) of the filling material is 0.01 to 100 % by weight to 100 % by weight of the resin or a resin blend product when the filling material is a carbon filling material (CNT, CF, CB, GF, AB), is 1 to 300 % by weight to 100 % by weight of the resin or the resin blend product when the filling material is a silica filling material or a metal oxide filling material (Al₂O₃, TiO₂, ZnO, CeO₂).

8. The cocontinuous structure comprising the filling material and the incompatible resin selected from the thermoplastic resin and the thermosetting resin and/or the incompatible elastomer according to any one of claims 1 to 7, wherein at least one system of the filling material is contained selectively in the resin and/or the elastomer.

9. The cocontinuous structure comprising the filling material and the incompatible resin selected from the thermoplastic resin or the thermosetting resin and/or the incompatible elastomer according to any one of claims 1 to 8, wherein the cocontinuous structure is obtained by putting at least the filling material which is the filler, and the incompatible resin selected from the thermoplastic resin or the thermosetting resin and/or the incompatible elastomer in a cylinder having a screw, through a put-in part provided at an end of a melt-kneading part having a heating part; sending the resin or elastomer that is melt-kneaded under the conditions from a rear end of the screw to a front end of the screw, wherein a rotation speed of the screw is from 100 rpm to 3000 rpm; and a shear rate is from 150 to 4500 sec⁻¹; confining the resin or elastomer in a gap at the front end of the screw; and conducting circulation of moving the resin or elastomer from the gap to the rear end of the screw.

10. The cocontinuous structure comprising the filling material and the incompatible resin selected from the thermoplastic resin or the thermosetting resin and/or the incompatible elastomer according to any one of claims 1 to 8, wherein at least the filling material which is the filler, and the incompatible resin selected from the thermoplastic resin or the thermosetting resin and/or the incompatible elastomer are put in a cylinder having a screw through a put-in part provided at an end of a melt-kneading part having a heating part and a sealing part; the resin or elastomer that is melt-kneaded under the conditions, wherein an interval between a surface of a front end of the screw and a surface of the sealing part that is located so as to face the surface of the front end is 0.5 to 5 mm; an inner diameter of a hole of the screw is 1 mm to 5 mm; a rotation speed of the screw is 100 rpm to 3000 rpm; a shear rate is 150 to 4500 sec⁻¹; and a heating temperature is a temperature higher than room temperature or a melting point or a glass transition point of the resin and/or the elastomer, is sent from a rear end of the screw to the front end and confined in a gap at the front end of the screw; and then circulation of moving the resin or elastomer from the gap to the rear end of the screw is conducted.

11. A molded product formed from a cocontinuous structure, wherein molding is conducted after conducting the circulation, of moving the resin or elastomer from the gap to the rear end of the screw according to claim 9 or 10.

12. A resin molded product, wherein the molded product is formed from the cocontinuous structural body according to claim 11 is in the form of one of a rod, a film, a sheet, and a fiber.

13. An electrically conductive or thermally conductive material formed from the resin molded product according to claim 12.

14. An electrode material, for a fuel cell formed from the resin molded product according to claim 12.

15. An electromagnetic wave absorption material formed from the resin molded product according to claim 12.
